# EUROPÄISCHE PATENTSCHRIFT

(11) **EP 4 116 854 B1**
(45) Veröffentlichungstag und Bekanntmachung des Hinweises auf die Patenterteilung: **19.11.2025**
(21) Anmeldenummer: 21184675.3
(22) Anmeldetag: 09.07.2021
(51) Int. Cl.: G01R 31/327, G06F 21/64, G05B 19/042, H04L 9/40

(54) **ÜBERPRÜFUNG VON SICHERHEITSRELEVANTEN PARAMETERWERTEN**
VERIFICATION OF SAFETY-RELEVANT PARAMETER VALUES
VÉRIFICATION DES VALEURS DE PARAMÈTRE RELATIVES À LA SÉCURITÉ

(43) Veröffentlichungstag der Anmeldung: 11.01.2023
(73) Patentinhaber: Siemens Aktiengesellschaft, 80333 München (DE)
(72) Erfinder: Braune, Christian, 92284 Poppenricht (DE); Kurbjuweit, Thomas, 92224 Amberg (DE); Prölß, Manfred, 92263 Ebermannsdorf (DE)
(74) Vertreter: Siemens Patent Attorneys

(56) Entgegenhaltungen:
- EP-A1- 2 341 406
- DE-A1- 102011 088 236

## Beschreibung

Die Erfindung betrifft ein Verfahren zur Überprüfung von sicherheitsrelevanten Parameterwerten und ein zur Ausführung dieses Verfahren geeignetes Parametriergerät. Und die Erfindung betrifft ein System, umfassend ein Parametriergerät und ein Schaltgerät.

Zahlreiche Geräte der industriellen Schalttechnik, z. B. Überlastrelais, Leistungsschalter, Motorstarter, Sanftstarter, Motormanagement-Systeme, dienen auch als Schutzeinrichtungen, die zum Beispiel verhindern, dass sich ein überlasteter Motor oder eine trockenlaufende Pumpe übermäßig erhitzen und zu einer Zündquelle werden. Diese Schaltgeräte beeinflussen somit die technische Sicherheit und müssen die entsprechenden Richtlinien einhalten, z. B. die dem Explosionsschutz dienende ATEX-Produktrichtlinie. Elektronische Schaltgeräte müssen dafür den Regeln der Sicherheitstechnik (Safety) entsprechen, z. B. der Sicherheitsstufe SIL 1 (SIL = Safety Integrity Level).

Hierbei ist auch die Einstellung von Parametern zu berücksichtigen: Diese Schaltgeräte haben einen oder mehrere sicherheitsrelevante Parameter, z. B. Motornennstrom und Auslöseklasse. Es muss sichergestellt sein, dass diese Parameter am Schaltgerät auf die korrekten Parameterwerte eingestellt sind, sonst besteht das Risiko, dass die Schutzfunktion wirkungslos ist. Zur Einstellung von Parametern, welche als sicherheitsrelevant gelten, sind heute unterschiedliche Verfahren bekannt:
Bei Überstromschutzeinrichtungen wie thermischen Überlastrelais sind mechanische Einstellvorrichtungen wie Drehkodierschalter oder Potentiometer bekannt, mit deren Hilfe an der Überstromschutzeinrichtung der Parameter Bemessungsbetriebsstrom eines überwachten Geräts eingestellt werden kann. Eine Überprüfung, ob die Einstellung des Parameters fehlerfrei erfolgt ist, kann indirekt erfolgen, indem bei einer definierten Bestromung der Überstromschutzeinrichtung die tatsächliche Auslösezeit ermittelt und mit einer durch eine Zeit-Strom-Kennlinie vorgegebenen Soll-Auslösezeit verglichen wird.

Am fehlersicheren Siemens Motorstarter SIMATIC ET200SP Failsafe können die Parameter Bemessungsbetriebsstrom (Iₑ) und Abschaltklasse (CLASS), welche im ATEX-Betrieb als sicherheitsrelevant gelten, durch das Einlesen eines Datensatzes oder mittels einer Engineering-Software eingestellt werden. Bevor jedoch neue Parameterwerte für die sicherheitsrelevanten Parameter vom Motorstarter übernommen werden, muss ein Anwender die neuen Parameterwerte anhand einer Blinksequenz, die von am Motorstarter angeordneten LEDs angezeigt wird, kontrollieren und bestätigen (LED = Light Emitting Diode).

Am Siemens Sanftstarter SIRIUS 3RW55 werden sicherheitsrelevante Parameterwerte von einem Anwender an einem HMI ("3RW5 HMI High-Feature") des Sanftstarters eingegeben und vom Sanftstarter als Textdatei auf eine SD-Speicherkarte geschrieben (HMI = Human Machine Interface; SD = Secure Digital). Der Anwender muss die Parameterwerte in der Textdatei kontrollieren, z. B. auf einem PC, und danach am HMI bestätigen (PC = Personal Computer).

Möglich wäre außerdem ein Verfahren, bei dem außer dem zu parametrierenden Gerät auch eine Engineering-Software, mit welcher die sicherheitsrelevanten Parameter eingestellt werden, die Safety-Anforderungen erfüllt. In diesem Fall ist technisch sichergestellt, dass die vom Anwender in der Engineering-Software eingegebenen Parameterwerte korrekt beim Gerät ankommen; eine zusätzliche Überprüfung der Parameterwerte ist somit nicht erforderlich. Allerdings würde dieses Verfahren die Verwendung von derzeit gängigen Engineering-Software-Produkten, welche die Safety-Anforderungen nicht erfüllen, stark einschränken.

Es ist Aufgabe der Erfindung, ein Verfahren bereitzustellen, mit dem eine verbesserte Überprüfung von sicherheitsrelevanten Parameterwerten eines Schaltgeräts erfolgen kann.

Diese Aufgabe wird erfindungsgemäß durch das Verfahren gemäß dem unabhängigen Anspruch 1 gelöst. Vorteilhafte Ausgestaltungen des erfindungsgemäßen Verfahrens sind Gegenstand der abhängigen Ansprüche. Patentliteratur EP2341406A1 betrifft ein Verfahren zur sicheren Parametrierung eines elektrischen Gerätes, wobei ein von einem Benutzer an einer Bedieneinheit eingegebener Parameter an das elektrische Gerät übertragen und dort schreibgeschützt gespeichert wird, der gespeicherte Parameter an die Bedieneinheit zurückübertragen und dort zur Bestätigung durch den Benutzer angezeigt wird und die Bestätigung an das elektrische Gerät übertragen wird. DE102011088236 bezieht sich auf ein Verfahren zum sicheren Betreiben eines Feldgerätes der Prozessautomatisierungstechnik.

Das erfindungsgemäße computerimplementierte Verfahren dient der Überprüfung von sicherheitsrelevanten Parameterwerten eines Schaltgeräts mithilfe einer Engineering-Software, welche auf einem Parametriergerät läuft. Dabei weist die Engineering-Software einen ersten und einen zweiten Teilbereich auf, welche voneinander unabhängig sind, d. h. voneinander unabhängig die von ihnen jeweils zugeordneten Verfahrensschritte steuern. Das Verfahren weist einen Schritt auf, in dem das Parametriergerät, gesteuert durch den ersten Teilbereich, Parameterwerte für das Schaltgerät, umfassend die sicherheitsrelevanten Parameterwerte, empfängt. Das Verfahren weist einen Schritt auf, in dem das Parametriergerät die Parameterwerte an das Schaltgerät sendet. Das Verfahren weist einen Schritt auf, in dem das Parametriergerät von dem Schaltgerät mindestens einen Sicherheits-Parameter-Datensatz mit den sicherheitsrelevanten Parameterwerten empfängt, welche von dem Schaltgerät aus den Parameterwerten extrahiert wurden. Und das Verfahren weist einen Schritt auf, in dem das Parametriergerät, gesteuert durch den zweiten Teilbereich, die mit dem Sicherheits-Parameter-Datensatz empfangenen sicherheitsrelevanten Parameterwerte zur Überprüfung durch einen Benutzer aus.

Dabei ist das Parametriergerät dazu geeignet, das Schaltgerät zu parametrieren, indem Parameterwerte für ein oder mehrere Parameter, durch die Funktionsweise des Schaltgerät definiert wird, über einen Kommunikationskanal vom Parametriergerät zum Schaltgerät übertragen werden; dieser Vorgang wird als Parametrierung des Schaltgerätes bezeichnet. Der Kommunikationskanal zwischen dem Parametriergerät und dem Schaltgerät kann eine drahtlose Kommunikationsverbindung, z. B. via Bluetooth oder WLAN, oder eine drahtgebundene Kommunikationsverbindung, z. B. eine Ethernet-Verbindung über ein LAN-Kabel, sein.

Die Parameter werden unterschieden in sicherheitsrelevante Parameter und nicht-sicherheitsrelevante Parameter. Zu den sicherheitsrelevanten Parametern können z. B. folgende Parameter zählen: Motornennstrom, Einstellstrom, Auslöseklasse, Trockenlaufschutz-Auslöseschwelle, Trockenlaufschutz-Verzögerung. Zu den nicht-sicherheitsrelevanten Parametern können z. B. folgende Parameter zählen: Auslöseschwellen für Temperaturen und Analogwerte, Hysteresen, Verzögerungen.

Das Parametriergerät ist ein softwaregesteuertes Gerät (Hardware), welches in der Lage ist, eine Engineering-Software auszuführen, welche die Parametrierung des Schaltgeräts ermöglicht bzw. unterstützt. Das Parametriergerät kann ein speziell für die Parametrierung entwickeltes elektronisches Gerät oder ein allgemeines elektronisches Gerät wie z. B. ein PC, ein Laptop oder ein Smartphone sein, auf dem die Engineering-Software abläuft. Dabei erfolgt die Konfiguration des Geräts über die Engineering-Software, die das Gerät veranlasst, als Parametriergerät für ein Schaltgerät zu funktionieren.

Die Engineering-Software ist ein Software-Programm, das sich in mehrere Teilbereiche gliedert, die unabhängig voneinander arbeiten, aber über eine den Teilbereichen gemeinsame Kommunikationsschnittstelle mit einem externen Kommunikationspartner kommunizieren, z. B. Daten austauschen können. Die Engineering-Software weist einen ersten Teilbereich und einen zweiten Teilbereich auf; dies erlaubt es, eine Eingabe und eine Ausgabe von Parameterwerten mittels der Engineering-Software getrennt durchzuführen: eine Eingabe von Parameterwerten zur Übermittlung der Parameterwerte an das Schaltgerät erfolgt über den ersten Teilbereich der Engineering-Software, eine Ausgabe von Parameterwerten zur Überprüfung der Parameterwerte erfolgt durch den zweiten Teilbereich der Engineering-Software.

Die Erfindung ist eine wesentliche Verbesserung der bekannten Verfahren zur Überprüfung von sicherheitsrelevanten Parameterwerten. Die Erfindung ermöglicht es, für die Parametrierung eines Schaltgerätes, welches nach Safety-Standards entwickelt wurde und Safety-Standards genügt, eine nach normalen Standards, d. h. nicht nach Safety-Standards entwickelte Engineering-Software zu verwenden; die Verwendung eines Safety-Standards genügenden Engineering-Software, deren Entwicklung erheblich aufwändiger ist als die einer "nur" normalen Standards genügenden Engineering-Software, ist also nicht nötig. Ein erster Teilbereich (= Programmteil) der Engineering-Software steuert die Übertragung der sicherheitsrelevanten Parameterwerte zusammen mit weiteren nicht-sicherheitsrelevanten Parameterwerten von dem Parametriergerät, genauer: einer I/O-Schnittstelle des Parametriergeräts, über einen Kommunikationskanal an das Schaltgerät. Das Schaltgerät übernimmt diese Parameterwerte, extrahiert die sicherheitsrelevanten Parameterwerte und stellt diese in einem Sicherheits-Parameter-Datensatz zusammen. Dieser Sicherheits-Parameter-Datensatz wird mit einer Prüfsumme gesichert und zum Parametriergerät, genauer: der I/O-Schnittstelle des Parametriergeräts, übertragen. Ein zweiter Teilbereich (= Programmteil) der Engineering-Software, welcher separat von dem ersten Teilbereich der Engineering-Software ist, liest diesen Datensatz ein, überprüft die Prüfsumme und zeigt die in dem Datensatz enthaltenen sicherheitsrelevanten Parameterwerte in einem separaten Anzeigefenster des Parametriergeräts, d. h. verschieden von einem zur Eingabe der Parameterwerte in das Parametergerät verwendbaren Anzeigefenster, an. Über ein Kommando "ATEX-Freigabe" kann ein Anwender die Parameter aus der Engineering-Software heraus freigeben. Die Begriffe "Anwender" und "Benutzer" werden in dieser Beschreibung synonym verwendet, beide einen Nutzer einer Hardware/ eines Geräts oder einer Software bezeichnend.

Durch die Erfindung wird Diversität erreicht, a) indem die sicherheitsrelevanten Parameterwerte sowohl von dem Parametriergerät zu dem Schaltgerät als auch von dem Schaltgerät zu dem Parametriergerät übertragen werden, mithilfe von zwei unterschiedlichen Datenpaketen, und b) durch die Unterteilung der Engineering-Software in einen ersten und einen zweiten Teilbereich.

Gemäß einer bevorzugten Ausgestaltung des Verfahrens empfängt das Parametriergerät die Parameterwerte von mindestens einer der folgenden Quellen:
- Empfangen von einem ersten GUI des Parametriergeräts, in das die Parameterwerte, z. B. für eine Anlaufparametrierung, von einem Benutzer manuell eingegeben wurden;
- Empfangen von einer Leitstelle, z. B. einem Prozessleitsystem, oder einem Webserver;
- Empfangen von einer Datenbank oder Einlesen eines vorgegebenen Parametersatzes zu einer Beispielapplikation;
- Einlesen aus einer Beschreibungs-Datei, z. B. einer GSDML-Datei, die eine standardisierte (genormte) Beschreibungsdatei für alle ProfiNet Device Geräte ist.

Von Vorteil ist dabei, dass die Möglichkeit der Nutzung unterschiedlicher Datenquellen den Einsatzbereich des Verfahrens vergrößert.

Gemäß einer bevorzugten Ausgestaltung des Verfahrens gibt das Parametriergerät die sicherheitsrelevanten Parameterwerte zur Überprüfung auf einem zweiten GUI des Parametriergeräts aus. Von Vorteil ist dabei, dass dadurch Diversität erreicht wird, dass die in dem Datensatz enthaltenen sicherheitsrelevanten Parameterwerte in einem separaten Anzeigefenster des Parametriergeräts, d. h. verschieden von einem zur Eingabe der Parameterwerte in das Parametergerät verwendbaren Anzeigefenster, angezeigt werden.

Gemäß einer bevorzugten Ausgestaltung des Verfahrens gibt das Parametriergerät die Parameterwerte an eine Software-Komponente der Engineering-Software, wo die Parameterwerte in einen oder mehrere Parameter-Datensätze umgeschrieben werden, für eine Übertragung der Parameterwerte. Die so gebildeten Parameter-Datensätze werden von einer Kommunikationsschnittstelle des Parametriergeräts via Kommunikationskanal zu dem Schaltgerät übertragen. Das Schaltgerät empfängt die Parameter-Datensätze, extrahiert daraus die sicherheitsrelevanten Parameterwerte und sammelt die extrahierten sicherheitsrelevanten Parameterwerte in einem Schreibvorgang in einem Sicherheits-Parameter-Datensatz. Von Vorteil ist dabei, dass die Parameter-Datensätze die Übertragung und die Verarbeitung der Parameterwerte verbessern.

Gemäß einer bevorzugten Ausgestaltung des Verfahrens gibt das Parametriergerät die sicherheitsrelevanten Parameterwerte zur Überprüfung auf einem Monitor des Parametriergeräts aus. Von Vorteil ist dabei, dass die sicherheitsrelevanten Parameterwerte schnell und einfach geprüft werden können, ohne dass weitere Geräte genutzt werden müssen.

Gemäß einer bevorzugten Ausgestaltung des Verfahrens ist der von dem Schaltgerät empfangene mindestens eine Sicherheits-Datensatz mit einer Prüfsumme gesichert, prüft das Parametriergerät die Prüfsumme und gibt das Parametriergerät die sicherheitsrelevanten Parameterwerte zur Überprüfung durch einen Benutzer aus, falls bei der Prüfung der Prüfsumme die Integrität der sicherheitsrelevanten Parameterwerte festgestellt wurde. Von Vorteil ist dabei, dass eine Veränderung der sicherheitsrelevanten Parameterwerte, z. B. durch einen Übertragungsfehler oder eine Manipulation, erkennbar ist.

Es ist auch möglich, dass die ein oder mehreren Parameter-Datensätze ausschließlich sicherheitsrelevante Parameterwerte aufweisen.

Gemäß einer bevorzugten Ausgestaltung des Verfahrens empfängt das Parametriergerät, nachdem die Überprüfung der sicherheitsrelevanten Parameterwerte durch einen Benutzer ergeben hat, dass sie korrekt sind, einen entsprechenden Freigabebefehl von dem Benutzer. Diese Aktion kann erfolgen durch Drücken eines Freigabe-Schaltfelds in einem GUI. Und das Parametriergerät sendet eine Nachricht zur Freigabe der mit dem Sicherheits-Parameter-Datensatz empfangenen sicherheitsrelevanten Parameterwerte an das Schaltgerät. Von Vorteil ist dabei, dass dem Schaltgerät explizit signalisiert wird, dass die sicherheitsrelevanten Parameterwerte, die das Schaltgerät vom Parametriergerät erhalten hat, korrekt sind.

Eine weitere Lösung der Aufgabe ist ein Parametriergerät zur Ausführung des Verfahrens nach einem der Ansprüche 1 bis 5, aufweisend eine Kommunikationsschnittstelle zum Senden von Parameterwerten eines Schaltgeräts an das Schaltgerät, zum Empfangen eines Sicherheits-Parameter-Datensatzes mit sicherheitsrelevanten Parameterwerten von dem Schaltgerät und zum Senden einer Nachricht zur Freigabe der sicherheitsrelevanten Parameterwerte an das Schaltgerät; eine Ausgabeeinheit zum Ausgeben der empfangenen sicherheitsrelevanten Parameterwerte zur Überprüfung durch einen Benutzer; eine Eingabeeinheit zum Empfangen eines Freigabebefehls von dem Benutzer nach positiver Überprüfung der empfangenen sicherheitsrelevanten Parameterwerte; und eine Prozessoreinheit zum Abarbeiten der Engineering-Software und zum Steuern von Kommunikationsschnittstelle, Ausgabeeinheit und Eingabeeinheit.

**Möglich** ist ein computerimplementiertes Verfahren zur Extraktion von sicherheitsrelevanten Parameterwerten eines Schaltgeräts aus empfangenen Parameterwerten, wobei das Verfahren folgende Schritte aufweist: Empfangen, an einem Schaltgerät, von Parameterwerten für das

Schaltgerät von einem Parametriergerät, wobei die Parameterwerte die sicherheitsrelevanten Parameterwerte umfassen; Extrahieren, durch das Schaltgerät, der sicherheitsrelevanten Parameterwerte aus den Parameterwerten; Generieren von mindestens einem Sicherheits-Parameter-Datensatz enthaltend die extrahierten sicherheitsrelevanten Parameterwerte; und Senden des mindestens einen Sicherheits-Parameter-Datensatzes an das Parametriergerät zur Überprüfung der sicherheitsrelevanten Parameterwerte.

Gemäß einer bevorzugten Ausgestaltung des Verfahrens wird der mindestens eine Sicherheits-Parameter-Datensatz mit einer Prüfsumme gesichert. Von Vorteil ist dabei, dass die Integrität der sicherheitsrelevanten Parameterwerte während der Übertragung geschützt wird.

Möglich ist ein Schaltgerät zur Ausführung des Verfahrens zur Extraktion von sicherheitsrelevanten Parameterwerten eines Schaltgeräts aus empfangenen Parameterwerten, aufweisend eine Prozessoreinheit zum Extrahieren von sicherheitsrelevanten Parameterwerten aus empfangenen Parameterwerten und zum Generieren von mindestens einem Sicherheits-Parameter-Datensatz enthaltend die extrahierten sicherheitsrelevanten Parameterwerte; und eine Kommunikationsschnittstelle zum Empfangen von Parameterwerten für das Schaltgerät, umfassend die sicherheitsrelevanten Parameterwerte, und zum Versenden eines Sicherheits-Parameter-Datensatzes mit den sicherheitsrelevanten Parameterwerten.

Eine weitere Lösung der Aufgabe ist ein System, umfassend ein erfindungsgemäßes Parametriergerät und ein Schaltgerät.

Eine weitere Lösung der Aufgabe ist ein Computerprogrammprodukt, welches einen ersten und einen zweiten Teilbereich aufweist, die voneinander unabhängig sind, umfassend Befehle, die bewirken, dass ein Parametriergerät das erfindungsgemäße Verfahren zur Überprüfung von sicherheitsrelevanten Parameterwerten eines Schaltgeräts ausführt.

**Möglich** ist ein Computerprogrammprodukt, umfassend Befehle, die bewirken, dass ein Schaltgerät das erfindungsgemäße Verfahren zur Extraktion von sicherheitsrelevanten Parameterwerten eines Schaltgeräts ausführt.

Die skizzierte Aufgabenstellung wird auch durch computerlesbare Medien gelöst, auf dem das erfindungsgemäßen Computerprogrammprodukt gespeichert sind.

Das Computerprogrammprodukt, auch kürzer als Computerprogramm bezeichnet, umfasst Befehle, die bewirken, dass das Parametriergerät des Anspruchs 6 die Verfahrensschritte nach einem der Ansprüche 1 bis 5 ausführt. Das Computerprogrammprodukt ist in einem Parametriergerät ausführbar ausgebildet. Das Computerprogrammprodukt kann als Software oder Firmware in einer Speichereinheit des Parametriergeräts speicherbar und durch einen Prozessor des Parametriergeräts, z. B. eine Recheneinheit oder einen Prozessor (CPU) oder einen Mikrocontroller (µC), ausführbar ausgebildet sein. Alternativ oder ergänzend kann das Computerprogrammprodukt auch zumindest teilweise als festverdrahtete Schaltung ausgebildet sein, beispielsweise als ein ASIC (= application-specific integrated circuit). Erfindungsgemäß ist das Computerprogrammprodukt dazu ausgebildet, mindestens eine Ausführungsform des skizzierten Verfahrens umzusetzen und durchzuführen. Dabei kann das Computerprogrammprodukt sämtliche Teilfunktionen des Verfahrens in sich vereinigen, also monolithisch ausgebildet sein. Alternativ kann das Computerprogrammprodukt auch segmentiert ausgebildet sein und jeweils Teilfunktionen auf Segmente verteilen, die auf separater Hardware ausgeführt werden. Beispielsweise kann ein Teil des Verfahrens in einem Parametriergerät durchgeführt werden und ein anderer Teil des Verfahrens in einer übergeordneten Steuereinheit, wie beispielsweise einer SPS, einem Leitstellen-PC oder einer Computer-Cloud.

Es wird weiter ein Computerprogrammprodukt vorgeschlagen, das direkt in den internen Speicher einer digitalen Recheneinheit geladen werden kann und Softwarecodeabschnitte umfasst, mit denen die Schritte des hierin beschriebenen Verfahrens ausgeführt werden, wenn das Produkt auf dem Parametriergerät läuft. Die Recheneinheit ist insbesondere eine Recheneinheit zur Steuerung eines Parametriergeräts. Das Computerprogrammprodukt kann auf einem Datenträger gespeichert sein, wie z. B. einem USB-Speicherstick, einer DVD oder einer CD-ROM, einem Flash-Speicher, EEPROM oder einer SD-Karte. Das Computerprogrammprodukt kann auch in der Form eines über ein drahtgebundenes oder drahtloses Netzwerk ladbares Signal vorliegen.

Das Verfahren ist zur automatischen Ausführung bevorzugt in Form eines Computerprogrammprodukts realisiert. Die Erfindung ist damit einerseits auch ein Computerprogrammprodukt mit durch einen Computer ausführbaren Programmcodeanweisungen und andererseits ein Speichermedium mit einem derartigen Computerprogramm, also ein Computerprogrammprodukt mit Programmcodemitteln.

Wenn im Folgenden Verfahrensschritte oder Verfahrensschrittfolgen beschrieben werden, bezieht sich dies auf Aktionen, die aufgrund des Computerprogrammprodukts oder unter Kontrolle des Computerprogrammprodukts erfolgen, sofern nicht ausdrücklich darauf hingewiesen ist, dass einzelne Aktionen durch einen Benutzer des Computerprogrammprodukts veranlasst werden. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Die oben beschriebenen Eigenschaften, Merkmale und Vorteile dieser Erfindung sowie die Art und Weise, wie diese erreicht werden, werden klarer und deutlicher verständlich durch die folgende Beschreibung der Zeichnungen. Hierbei zeigen in schematischer und nicht maßstabsgetreuer Darstellung:
- FIG 1: ein Schaltgerät und ein Parametriergerät zur Parametrierung des Schaltgeräts; und
- FIG 2: ein Diagramm zum zeitlichen Ablauf.

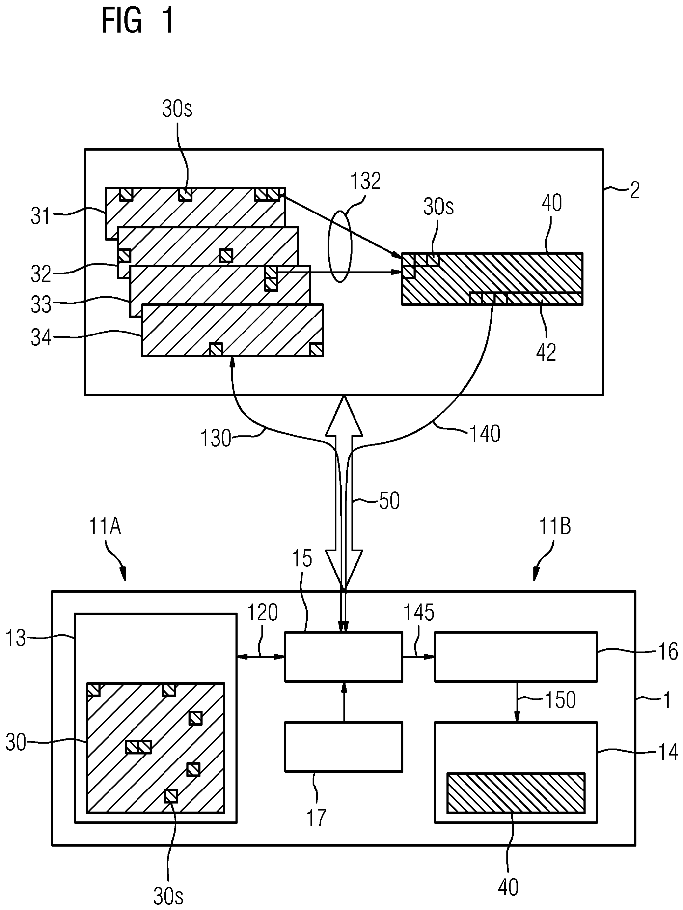

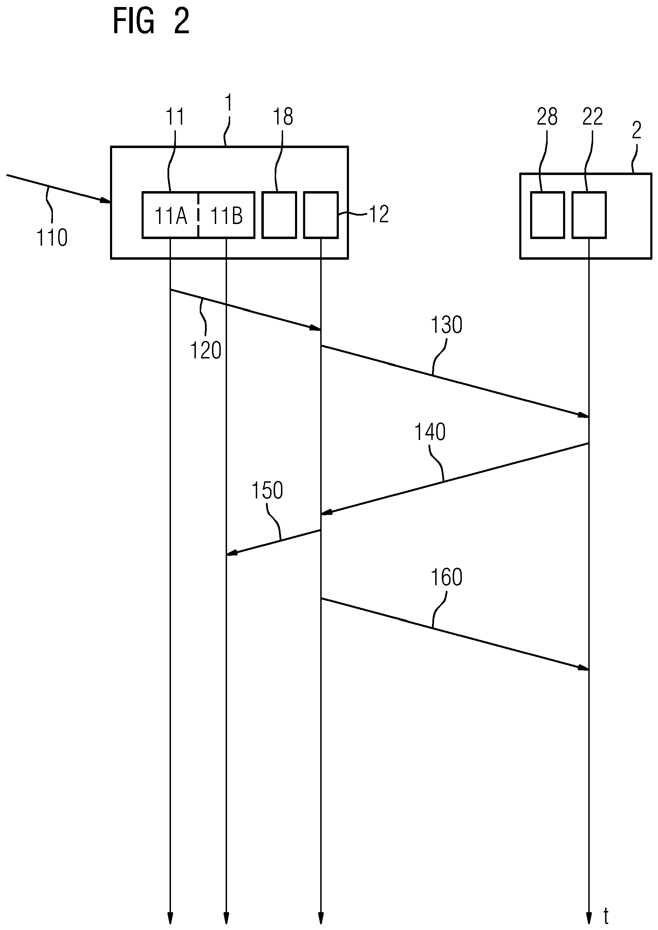

FIG 1 und 2 zeigen ein Parametriergerät 1 und ein Schaltgerät 2. Dabei ist das Parametriergerät 1 dazu geeignet, das Schaltgerät 2 zu parametrieren, indem ein oder mehrere Parameterwerte 30, welche Funktionen des Schaltgerät 2 definieren, über einen Kommunikationskanal 50 vom Parametriergerät 1 zum Schaltgerät 2 übertragen werden; dieser Vorgang wird als Parametrierung des Schaltgerätes 2 bezeichnet. Der Kommunikationskanal 50 kann eine drahtlose Kommunikationsverbindung, z. B. via Bluetooth oder WLAN, oder eine drahtgebundene Kommunikationsverbindung, z. B. eine Ethernet-Verbindung über ein LAN-Kabel, sein

Das Parametriergerät 1 ist ein softwaregesteuertes Gerät (Hardware), das in der Lage ist, eine Engineering-Software auszuführen, welche die Parametrierung des Schaltgeräts ermöglicht bzw. unterstützt. Das Parametriergerät 1 kann ein speziell für die Parametrierung entwickeltes elektronisches Gerät oder ein allgemeines elektronisches Gerät wie z. B. ein PC, ein Laptop oder ein Smartphone sein, auf dem die Engineering-Software abläuft. Das Parametriergerät 1 weist dabei folgende Hardware-Komponenten auf: einen Prozessor 18, einen Arbeitsspeicher (= RAM = Random Access Memory), einen Datenspeicher wie z. B. eine Festplatte, und ein GUI als HMI (GUI = Graphical User Interface; HMI = Human Machine Interface). Die Engineering-Software kann in dem Datenspeicher gespeichert sein, von wo sie zum Ausführen der Software in den Arbeitsspeicher geladen wird, um durch den Prozessor abgearbeitet zu werden. Mittels des HMI kann ein Benutzer Eingabedaten an das Parametriergerät 1 übergeben, z. B. über eine Tastatur Parameterwerte in ein Parameter-Formular eingeben, und Ausgabedaten vom Parametriergerät 1 erhalten, z. B. in dem Schaltgerät 2 vorliegende Parameterwerte in einem Fenster eines GUI anzeigen lassen.

Die Engineering-Software weist einen ersten Teilbereich 11A und einen zweiten Teilbereich 11B auf; dies erlaubt es, eine Eingabe und eine Überprüfung von Parameterwerten mittels der Engineering-Software getrennt durchzuführen: eine Eingabe von Parameterwerten erfolgt über den ersten Teilbereich 11A der Engineering-Software, eine Überprüfung von Parameterwerten erfolgt durch den zweiten Teilbereich 11B der Engineering-Software.

In ein erstes GUI-Fenster 13, welches durch den ersten Teilbereich 11A der Engineering-Software gesteuert wird, gibt ein Benutzer Parameterwerte 30 ein, wobei eine Teilmenge der Parameterwerte 30 sicherheitsrelevante Parameterwerte 30s sind. Die Parameterwerte 30 werden an eine Software-Komponente 15 "Datensatz lesen/ schreiben" der Engineering-Software gegeben, wo die Parameterwerte 30 in mehrere Parameter-Datensätze 31-34 umgeschrieben werden. Die so gebildeten Parameter-Datensätze 31-34 werden von einer Kommunikationsschnittstelle 12 des Parametriergeräts 1 über den Kommunikationskanal 50 zu dem Schaltgerät 2 übertragen 130.

Das Schaltgerät 2 weist eine Kommunikationsschnittstelle 22 und eine Prozessoreinheit 28 auf. Das Schaltgerät 2 empfängt die Parameter-Datensätze 31-34 über die Kommunikationsschnittstelle 22, extrahiert daraus mithilfe des Prozessors 28 die sicherheitsrelevanten Parameterwerte 30s und sammelt die extrahierten sicherheitsrelevanten Parameterwerte 30s in einem Schreibvorgang 132 in einem Sicherheits-Parameter-Datensatz 40, der durch eine Prüfsumme 42, welche dem Sicherheits-Parameter-Datensatz 40 hinzugefügt wird, gesichert wird. Der so gebildete Sicherheits-Parameter-Datensatz 40 wird von dem Schaltgerät 2 über den Kommunikationskanal 50 zu der Kommunikationsschnittstelle 12 des Parametriergeräts 1 übertragen 140.

Das Parametriergerät 1 empfängt den Sicherheits-Parameter-Datensatz 40 und gibt ihn an die Software-Komponente 15 "Datensatz lesen/ schreiben" der Engineering-Software, wo der Sicherheits-Parameter-Datensatz 40 ausgelesen wird. Die aus dem Sicherheits-Parameter-Datensatz 40 ausgelesenen Daten, d. h. die sicherheitsrelevanten Parameterwerte 30s und die Prüfsumme 42, werden an eine durch den zweiten Teilbereich 11B der Engineering-Software gesteuerte Software-Komponente 16 "Überprüfung Prüfsumme" der Engineering-Software übertragen 145. Nachdem die Software-Komponente 16 "Überprüfung Prüfsumme" mithilfe der Prüfsumme 42 die Integrität der sicherheitsrelevanten Parameterwerte 30s positiv geprüft hat, werden die sicherheitsrelevanten Parameterwerte 30s in einem zweiten GUI-Fenster 14, welches durch den zweiten Teilbereich 11A der Engineering-Software gesteuert wird, dem Benutzer zur Überprüfung dargestellt 150.

Falls der Benutzer geprüft hat, dass die in dem zweiten GUI-Fenster 14 angezeigten sicherheitsrelevanten Parameterwerte 30s korrekt sind, so veranlasst er mittels einer Software-Komponente 17 "Freigabe der sicherheitsrelevanten Parameterwerte" der Engineering-Software, z. B. durch Anklicken eines Freigabe-Buttons in einem Bildschirmfenster, das Senden eines Signal von dem Parametriergerät 1 an das Schaltgerät 2, dass die in den Parameter-Datensätzen 31-34 an das Schaltgerät 2 übertragenen sicherheitsrelevanten Parameterwerte 30s korrekt sind.

## Patentansprüche

1. Computerimplementiertes Verfahren zur Überprüfung von sicherheitsrelevanten Parameterwerten (30s) eines Schaltgeräts (2) mithilfe einer Engineering-Software (11), welche auf einem Parametriergerät (1) läuft,
wobei die Engineering-Software einen ersten (11A) und einen zweiten (11B) Teilbereich aufweist, die voneinander unabhängig sind,
wobei das Verfahren folgende Schritte aufweist:
- Das Parametriergerät (1) empfängt, gesteuert durch den ersten Teilbereich (11A), Parameterwerte (30) für das Schaltgerät (2), umfassend die sicherheitsrelevanten Parameterwerte (30s);
- das Parametriergerät (1) sendet die Parameterwerte (30) an das Schaltgerät (2);
- das Parametriergerät (1) empfängt von dem Schaltgerät (2) mindestens einen Sicherheits-Parameter-Datensatz (40) mit den sicherheitsrelevanten Parameterwerten (30s), welche von dem Schaltgerät (2) aus den Parameterwerten (30) extrahiert wurden; und
- das Parametriergerät (1) gibt, gesteuert durch den zweiten Teilbereich (11B), die mit dem Sicherheits-Parameter-Datensatz (40) empfangenen sicherheitsrelevanten Parameterwerte (30s) zur Überprüfung durch einen Benutzer aus.

2. Verfahren nach Anspruch 1, wobei das Parametriergerät (1) die Parameterwerte (30) von mindestens einer der folgenden Quellen empfängt:
- Empfangen von einem ersten GUI (13) des Parametriergeräts (1), in das die Parameterwerte (30) von einem Benutzer manuell eingegeben wurden;
- Empfangen (110) von einer Leitstelle oder einem Webserver;
- Empfangen (110) von einer Datenbank;
- Einlesen aus einer Beschreibungs-Datei.

3. Verfahren nach Anspruch 1 oder 2, wobei das Parametriergerät (1) die sicherheitsrelevanten Parameterwerte (30s) zur Überprüfung auf einem zweiten GUI (14) des Parametriergeräts (1) ausgibt.

4. Verfahren nach einem der vorhergehenden Ansprüche,
wobei der von dem Schaltgerät (2) erhaltene mindestens eine Sicherheits-Parameter-Datensatz (40) mit einer Prüfsumme (42) gesichert ist, das Parametriergerät (1) die Prüfsumme (42) prüft und das Parametriergerät (1) die sicherheitsrelevanten Parameterwerte (30s) zur Überprüfung durch einen Benutzer ausgibt, falls bei der Prüfung der Prüfsumme (42) die Integrität der sicherheitsrelevanten Parameterwerte (30s) festgestellt wurde.

5. Verfahren nach einem der vorhergehenden Ansprüche,
wobei das Parametriergerät (1), nachdem die Überprüfung der sicherheitsrelevanten Parameterwerte (30s) durch einen Benutzer ergeben hat, dass sie korrekt sind, einen entsprechenden Freigabebefehl von dem Benutzer empfängt und eine Nachricht zur Freigabe der mit dem Sicherheits-Parameter-Datensatz (40) empfangenen sicherheitsrelevanten Parameterwerte (30s) an das Schaltgerät (2) sendet.

6. Parametriergerät (1) zur Ausführung des Verfahrens nach einem der Ansprüche 1 bis 5, aufweisend:
- Eine Kommunikationsschnittstelle (12) zum Senden von Parameterwerten (30) eines Schaltgeräts (2) an das Schaltgerät (2), zum Empfangen eines Sicherheits-Parameter-Datensatzes (40) mit sicherheitsrelevanten Parameterwerten (30s) von dem Schaltgerät (2) und zum Senden einer Nachricht zur Freigabe der sicherheitsrelevanten Parameterwerte (30s) an das Schaltgerät (2);
- eine Ausgabeeinheit (14) zum Ausgeben der empfangenen sicherheitsrelevanten Parameterwerte (30s) zur Überprüfung durch einen Benutzer;
- eine Eingabeeinheit (17) zum Empfangen eines Freigabebefehls von dem Benutzer nach positiver Überprüfung der empfangenen sicherheitsrelevanten Parameterwerte (30s); und
- eine Prozessoreinheit (18) zum Abarbeiten der Engineering-Software (11) und zum Steuern von Kommunikationsschnittstelle (12), Ausgabeeinheit (14) und Eingabeeinheit (17).

7. System, umfassend ein Parametriergerät (1) nach Anspruch 6 und ein Schaltgerät (2)

8. Computerprogrammprodukt, welches einen ersten (11A) und einen zweiten (11B) Teilbereich aufweist, die voneinander unabhängig sind, umfassend Befehle, die bewirken, dass ein Parametriergerät (1) das Verfahren nach einem der Ansprüche 1 bis 5 ausführt.

9. Computerlesbares Medium, auf dem das Computerprogrammpro dukt nach Anspruch 8 gespeichert ist.

## Claims

1. Computer-implemented method for verifying safety-relevant parameter values (30s) of a switching device (2) using engineering software (11) running on a parameterization device (1),
wherein the engineering software has a first (11A) and a second (11B) subsection that are independent of each other,
wherein the method comprises the following steps:
- the parameterization device (1), controlled by the first subsection (11A), receives parameter values (30) for the switching device (2) comprising the safety-relevant parameter values (30s);
- the parameterization device (1) sends the parameter values (30) to the switching device (2);
- the parameterization device (1) receives from the switching device (2) at least one safety parameter data record (40) with the safety-relevant parameter values (30s) which were extracted from the parameter values (30) by the switching device (2); and
- the parameterization device (1), controlled by the second subsection (11B), outputs the safety-relevant parameter values (30s) received with the safety parameter data record (40) for verification by a user.

2. Method according to Claim 1, wherein the parameterization device (1) receives the parameter values (30) from at least one of the following sources:
- receiving from a first GUI (13) of the parameterization device (1) in which the parameter values (30) were manually entered by a user;
- receiving (110) from a control centre or a web server;
- receiving (110) from a database;
- reading in from a description file.

3. Method according to Claim 1 or 2, wherein the parameterization device (1) outputs the safety-relevant parameter values (30s) for verification on a second GUI (14) of the parameterization device (1).

4. Method according to any one of the previous claims,
wherein the at least one safety parameter data record (40) received by the switching device (2) is secured with a checksum (42), the parameterization device (1) checks the checksum (42) and the parameterization device (1) outputs the safety-relevant parameter values (30s) for verification by a user if the integrity of the safety-relevant parameter values (30s) was established when the checksum (42) was checked.

5. Method according to any one of the previous claims,
wherein the parameterization device (1), after the safety-relevant parameter values (30s) have been verified by a user as being correct, receives a corresponding release command from the user and sends a message to the switching device (2) to release the safety-relevant parameter values (30s) received with the safety parameter data record (40).

6. Parameterization device (1) for carrying out the method according to any one of Claims 1 to 5, comprising:
- a communication interface (12) for sending parameter values (30) of a switching device (2) to the switching device (2), for receiving a safety parameter data record (40) with safety-relevant parameter values (30s) from the switching device (2), and for sending a message to the switching device (2) to release the safety-relevant parameter values (30s);
- an output unit (14) for outputting the received safety-relevant parameter values (30s) for verification by a user;
- an input unit (17) for receiving a release command from the user after positive verification of the received safety-relevant parameter values (30s); and
- a processor unit (18) for processing the engineering software (11) and controlling the communication interface (12), output unit (14), and input unit (17).

7. System comprising a parameterization device (1) according to Claim 6 and a switching device (2).

8. Computer program product which has a first (11A) and a second (11B) subsection that are independent of each other, comprising commands which cause a parameterization device (1) to carry out the method according to any one of Claims 1 to 5.

9. Computer-readable medium on which the computer program product according to Claim 8 is stored.

## Revendications

1. Procédé mis en œuvre par ordinateur de contrôle de valeurs (30s) de paramètre pertinentes du point de vue de la sécurité d'un appareil (2) de coupure, à l'aide d'un nœud logiciel (11) d'ingénierie, qui passe sur un appareil (1) de paramétrage,
dans lequel le logiciel d'ingénierie a un premier (11A) et un deuxième (11B) domaines partiels, qui sont indépendants l'un de l'autre,
dans lequel le procédé a les stades suivants :
- l'appareil (1) de paramétrage reçoit, commandé par le premier domaine (11A) partiel, des valeurs (30) de paramètre pour l'appareil (2) de coupure, comprenant les valeurs (30s) de paramètre pertinentes du point de vue de la sécurité ;
- l'appareil (1) de paramétrage envoie les valeurs (30) de paramètre à l'appareil (2) de coupure ;
- l'appareil (1) de paramétrage reçoit de l'appareil (2) de coupure au moins un ensemble (40) de données de paramètre de sécurité, comprenant les valeurs (30s) de paramètre pertinentes du points de vue de la sécurité, qui ont été extraites des valeurs (30) de paramètre par l'appareil (2) de coupure ; et
- l'appareil (1) de paramétrage donne, pour le contrôle par un utilisateur, commandé par le deuxième domaine (11B) partiel, les valeurs (30s) de paramètre pertinentes du point de vue de la sécurité reçues avec l'ensemble (40) de données de paramètre de sécurité pour le.

2. Procédé suivant la revendication 1, dans lequel l'appareil (1) de paramétrage reçoit les valeurs (30) de paramètre d'au moins l'une des sources suivantes :
- réception d'un premier GUI (13) de l'appareil (1) de paramétrage, dans lequel les valeurs (30) de paramétrage ont été entrées manuellement par un utilisateur ;
- réception (110) d'un poste de commande ou d'un serveur toile ;
- réception (110) d'une base de données ;
- lecteur dans un fichier de description.

3. Procédé suivant la revendication 1 ou 2, dans lequel l'appareil (1) de paramétrage donne, sur un deuxième GUI (14) de l'appareil (1) de paramétrage, les valeurs (30s) de paramètre pertinentes du point de vue de la sécurité pour le contrôle.

4. Procédé suivant l'une des revendications précédentes, dans lequel le au moins un ensemble (40) de données de paramètre de sécurité obtenu par l'appareil (2) de coupure est sécurisé par une somme (42) de contrôle, l'appareil (1) de paramétrage contrôle la somme (42) de contrôle et l'appareil (1) de paramétrage donne, pour le contrôle par un utilisateur, les valeurs (30s) de paramètre pertinentes du point de vue de la sécurité, si, lors du contrôle de la somme (42) de contrôle, l'intégrité des valeurs (30s) de paramètre pertinentes du point de vue de la sécurité a été constatée.

5. Procédé suivant l'une des revendications précédentes, dans lequel l'appareil (1) de paramétrage reçoit, après que le contrôle des valeurs (30s) de paramètre pertinentes du point de vue de la sécurité par un utilisateur a donné qu'elles sont correctes, une instruction de validation correspondante de l'utilisateur et envoie à l'appareil (2) de coupure un message de validation des valeurs (30s) de paramètre pertinentes du point de vue de la sécurité reçu avec l'ensemble (40) de données de paramètre de sécurité.

6. Appareil (1) de paramétrage pour l'exécution du procédé suivant l'une des revendications 1 à 5, comportant :
- une interface (12) de communication pour l'envoi de valeurs (30) de paramètre d'un appareil (2) de coupure à l'appareil (2) de coupure, pour la réception d'un ensemble (40) de données de paramètre de sécurité comprenant des valeurs (30s) de paramètre pertinentes du point de vue de la sécurité de l'appareil (2) de coupure et pour l'envoi d'un message de validation des valeurs (30s) de paramètre pertinentes du point de vue de la sécurité à l'appareil (2) de coupure ;
- une unité (14) de sortie pour donner les valeurs (30s) de paramètre pertinentes du point de vue de la sécurité, qui ont été reçues pour le contrôle par un utilisateur ;
- une unité (17) d'entrée pour la réception d'une instruction de validation par l'utilisateur après contrôle positif des valeurs (30s) de paramètre pertinentes du point de vue de la sécurité, qui ont été reçues ; et
- une unité (18) de processeur pour l'élaboration du logiciel (11) d'ingénierie et pour la commande de l'interface (12) de communication de l'unité (14) de sortie et de l'unité (17) d'entrée.

7. Système, comprenant un appareil (1) de paramétrage suivant la revendication 6 et un appareil (2) de coupure.

8. Produit de programme d'ordinateur, qui a un premier (11A) et un deuxième (11B) domaines partiels, qui sont indépendants l'un de l'autre, comprenant des instructions, qui font qu'un appareil (1) de paramétrage exécute le procédé suivant l'une des revendications 1 à 5.

9. Support déchiffrable par ordinateur, sur lequel est mis en mémoire le produit de programme d'ordinateur suivant la revendication 8.
